# EUROPEAN PATENT SPECIFICATION

(11) **EP 2 617 687 B1**
(45) Date of publication and mention of the grant of the patent: **22.09.2021**
(21) Application number: 13163763.9
(22) Date of filing: 03.03.2009
(51) Int. Cl.: C03B 37/027, C03B 37/075, C03C 25/42, B64C 1/14, C08J 5/04

(54) **Composite structure formed from glass fibre and a polymer**
Kompositstruktur umfassend eine Glasfaser und ein Polymer
Strucuture composite faite de fibre de verre et de composite

(30) Priority: 05.03.2008 US 42549
(43) Date of publication of application: 24.07.2013
(62) Divisional of application: 09716612.8
(73) Proprietor: The Boeing Company, Chicago, IL 60606-1596 (US)
(72) Inventor: Wilenski, Mark S., Mercer Island, WA 98040 (US); Lang, Adam J., Huntington Beach, CA 92646 (US); Markus, Alan M., Lake Forest, CA 92630 (US); Godby, Larry A., North Hills, CA 91343 (US)
(74) Representative: Boult Wade Tennant LLP

(56) References cited:
- WO-A1-97/21538
- WO-A1-99/44957
- JP-A- H0 718 186
- US-A- 5 024 859
- US-A1- 2007 032 157
- None

## Description

### FIELD

The present disclosure is directed to a transparent composite window comprising transparent reinforced composite materials, more particularly transparent glass fibers.

### BACKGROUND

Transparent composite materials are known for use in vehicle and other applications requiring light transmission or visual transparency. Such transparent composite materials include windows useful for light transmission therethrough, particularly in rugged environments and in locations requiring ballistic resistance. Such reinforcement further provides the window with improved strength.

Transparent composite materials typically include a reinforcing fiber in a polymeric matrix. In order to render the composite material transparent, both the matrix material and the reinforcing fiber are fabricated from a transparent material. The materials are typically selected to include the same optical properties, thus minimizing distortion.

The geometry of reinforcing fibers also affects the distortion imparted to the light passing through the transparent device. For example, round fibers (i.e., fibers having a circular cross-section) provide prismatic or other optical light refractive effects that provide overall distortion of the light passing through the transparent device.

These transparent composite materials are also required to withstand high impacts and structural loads, and thus are required to have high strength properties. The strength of these composite materials is dependent upon both the strength of the matrix material and the reinforcing fibers.
The strength of the reinforcing fibers is determined by the fiber material, geometry and characteristics imparted to the fibers during manufacture, such as surface cracks, imperfections, and other inconsistencies.

WO-A1-97/21538, in accordance with its abstract, states one or more fibers made of a ceramic, such as glass, which are each suitable for being used as a reinforcing fiber in a composite product or article. Each ceramic reinforcing fiber has a ceramic core and one or more ceramic layers disposed around the core. The layered structure of the present ceramic reinforcing fiber improves the overall strength and fracture toughness of the fiber. Before a crack propagating through the outermost layer can propagate through the remainder of the fiber, a new crack must be initiated at the pristine surface (i.e., interface) of the underlying ceramic material. When there are multiple layers, a new crack must be initiated and propagate through each successive layer of ceramic. A ceramic fiber composite article is made by disposing a plurality of the ceramic reinforcing fibers into a suitable matrix. The ceramic reinforcing fibers are each made by providing a source of at least one molten ceramic material, suitable for making a reinforcing fiber for a composite application, and drawing molten ceramic from the source through at least two openings to thereby form each ceramic reinforcing fiber. The source can be one or more bushings, with each bushing having a plurality of tips and each tip having at least two nozzles, one nozzle inside the other. These nozzles form the at least two openings through which molten ceramic is drawn.

WO 99/44957, in accordance with its abstract, states fiber strands including glass fibers coated with thermally conductive, inorganic solid particles useful for reinforcing composites such as laminated printed circuit boards.

### SUMMARY

There is described herein a transparent composite window formed from glass fiber and a polymer. The glass fiber includes a first glass material and a second glass material with the second glass material forming a uniform coating around the first glass material. The first glass material has a first set of properties including a first refractive index, a first Abbe number, a first transmission, a first modulus of elasticity and a first coefficient of thermal expansion. The second glass material has a second set of properties including a second refractive index, a second Abbe number, a second transmission, a second modulus of elasticity and a second coefficient of thermal expansion. The second coefficient of thermal expansion is less than the first coefficient of expansion. The first refractive index is equal to the second refractive index and the first refractive index is equal to the refractive index of the polymer. The second glass material is chemically and thermally compatible with the first glass material.

### BRIEF DESCRIPTION OF THE DRAWINGS

FIG. 1 shows a schematic cross-section view of a glass fiber.
FIG. 2 shows a method of forming a glass fiber.

### DETAILED DESCRIPTION OF THE DISCLOSURE

"Transparent", "transparency" and grammatical variations thereof include an ability of a material to permit passage of at least a portion of light directed at the material, the term "light" including any wavelength range of interest, and more particularly to the visible, near visible and near infra-red light ranges from about 380nm to about 1000nm.

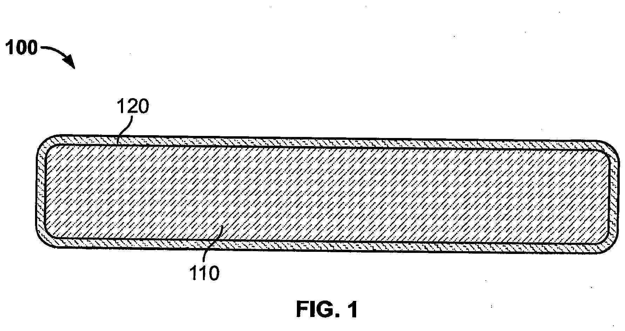

Referring to Fig. 1, a cross-section view of a glass fiber 100. As can be seen in Fig. 1, glass fiber 100 includes a first glass material 110 and a second glass material 120. The second glass material 120 forms a substantially uniform coating around the first glass material 110. The glass fiber 100 has a generally rectangular cross-section geometry having a total thickness T, a first material thickness T₁, a second glass material coating thickness T₂, and a width W. The first glass material 110 and the second glass material 120 may both be transparent glass. In one embodiment, the first glass material 110 and the second glass material 120 may both be transparent optical glass.

Alternatively, the glass fiber 100 may have a different cross-section geometry, for example, but not limited to generally square, generally oval, generally round and other similar geometries.

The glass fiber 100 may have a total thickness T of between about 1 µm to about 500 µm with an aspect ratio of width W to total thickness T of between about 5 and about 500. Alternatively, the glass fiber 100 may have a total thickness T of between about 5 µm and about 50 µm with an aspect ratio of width W to total thickness T of between about 10 and about 50.

The second glass material coating thickness T₂ may be between about 0.1% and about 100% the first glass material thickness T₁. Alternatively, the second glass material coating thickness T₂ may be between about 50 nm and about 5 µm, or the second glass material coating thickness T₂ may be between about 50 nm and about 1 µm.

The glass fiber 100 may have a width W of between about 5 µm and 5000 µm and an aspect ratio of width W to total thickness T of between about 5 and about 500. Alternatively, the glass fiber 100 may have a width of between about 100 µm to about 500 µm and an aspect ratio of width W to total thickness T of between about 10 and about 30.

The first glass material 110 is selected to have a first set of properties including, but not limited to, a first RI (refractive index), a first Abbe number, a first transmission, a first modulus (modulus of elasticity) and a first CTE (coefficient of thermal expansion). The second glass material 120 is selected to have a second set of properties including, but not limited to, a second RI, a second Abbe number, a second transmission, a second modulus and a second CTE. The second CTE is selected to be less than the first CTE.

The second glass material 120 must be chemically compatible with the first glass material 110. Furthermore, the second glass material 120 must not contain elements that will negatively affect the desirable properties of the first glass material 110 during the method of forming the glass fiber 100 or in the glass fiber 100.

Additionally, the second glass material 120 must be thermally compatible with the first glass material 110 to facilitate forming the fiber 100. For example, the second glass material 120 must have approximately the same viscosity versus temperature profile at hot working temperatures as the first glass material.

The second CTE may be between about 0% to about 100% less than the first CTE, or between about 70% to about 90% less than the first CTE.

The first RI is equal to the RI of a polymeric material in which the glass fiber 100 is used to form a window.

The second modulus may be about equal to or less than the first modulus. Alternatively, the second modulus may be between about equal and about 60% less than the first modulus.

The second glass material may have approximately the same optical performance as the first glass material. The second glass material may also have approximately the same viscosity versus temperature profile at hot working temperatures as the first glass material to facilitate forming the glass fiber.

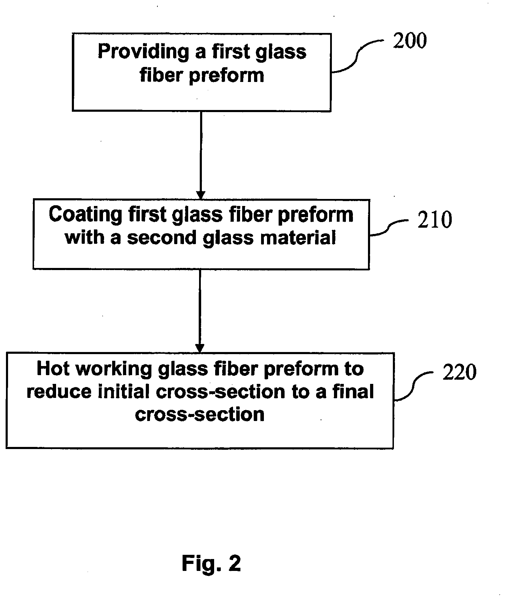

The glass fiber 100 may be formed by the exemplary method shown in Fig. 2. First, a first glass material preform of the first glass material 110 is formed having a desired cross-section geometry and aspect ratio to provide a first glass fiber preform as shown in step 200. The cross-section of first material glass preform may be generally rectangular, generally square, generally circular, or other similar shape. The first glass material preform may be formed by drawing, spinning, machining or other similar process.

The first glass material preform is then coated with a substantially uniform coating of the second glass material 120 as shown in step 210. The first glass material 110 may be chosen for a desired optical performance. The second glass material 120 is chosen for its lower CTE compared to the CTE of the first glass material.

The second glass material 120 may be coated onto the first glass material preform by slumping, chemical vapor deposition, plasma vapor deposition, sol-gel processing, slurry coating, or other similar process. Alternatively, a coating of the second glass material 120 may be formed on the first glass material preform by modifying the surface composition of the first material preform by methods such as, but not limited to, reactive chemical diffusion. By forming the second glass material 120 by modifying the surface of the first glass material preform composition, the second glass material 120 has a compositional gradient varying from that of the surface of the coated first glass material preform to the first glass material preform composition. The material properties of the modified surface would also have a gradient from the properties of the second glass material 120 at the surface to the properties of the first glass material preform material at some predetermined distance from the surface. The composition and property gradient may be abrupt or gradual in nature.

The first glass material preform may have a generally rectangular cross-section having a thickness of between about 0.5 mm and about 12.7 cm and an aspect ratio of width to thickness of between about 5 and about 500.

Alternatively, the second glass material coating thickness on the first glass material preform is between about 1 µm and 25.4 mm.

The second glass material coating thickness may be between about 0.1% and about 100% the thickness of the first glass material preform.

The coated glass fiber preform is then drawn under heat and pressure by methods well known in the art to form a glass fiber 100 having a rectangular cross-section geometry having a total thickness, a first material thickness, a second glass material coating thickness, and a width as discussed above as shown in step 220. The glass fiber may be formed in a continuous, semi-continuous, or step process. The coated glass fiber may be provided as a stock material that is later drawn to form a glass fiber 100.

The glass fiber 100 may be used with an epoxy resin or other polymer to form a window, by methods appreciated by one of ordinary skill in the art.

The formed glass fiber 100 may have a second glass material coating thickness between about 0.1% and about 100% the first glass material thickness. Alternatively, the second glass material coating thickness may be between about 50 nm and about 5 µm or between about 50 nm and about 1 µm.

The formed glass fiber 100 may have a total thickness of between about 1 µm to about 500 µm with an aspect ratio of width to total thickness of between about 5 and about 500. Alternatively, the formed glass fiber 100 may have a total thickness of between about 5 µm and about 50 µm with an aspect ratio of width to total thickness of between about 10 and about 50.

The formed glass fiber 100 may have a width of between about 5 µm and 5000 µm and an aspect ratio of width to total thickness of between about 5 and about 500. Alternatively, the glass fiber 100 may have a width of between about 100 µm to about 500 µm and an aspect ratio of width to total thickness of between about 10 and about 30.

To form the glass fiber 100, the first glass material 110 is selected to have a first set of optical properties, including but not limited to a first RI, a first Abbe number, a first transmission, a first modulus and a first CTE, and the second glass material is selected to have a second set of optical properties, including, but not limited to a second RI, a second Abbe number, a second transmission, a second modulus and a second CTE. The second CTE is selected to be less than the first CTE.

The second glass material 120 must be chemically compatible with the first glass material 110. Furthermore, the second glass material 120 must not contain elements that will negatively affect the desirable properties of the first glass material 110 during the method of forming the glass fiber 100 or in the glass fiber 100.

Additionally, the second glass material 120 must be thermally compatible with the first glass material 110 to facilitate forming the fiber 100. For example, the second glass material 120 must have approximately the same viscosity versus temperature profile at hot working temperatures as the first glass material.

The formed glass fiber 100 may include a second glass material 120 having a second CTE between about 0% to about 100% less than the first CTE. Alternatively, the second CTE may be between about 70% to about 90% of the first CTE.

The formed glass fiber 100 may include a first glass material 110 having a first modulus and a second glass material 120 having a second modulus, the second modulus being about equal to or less than the first modulus. Alternatively, the second modulus may be between about equal and about 60% less than the first modulus.

The formed glass fiber 100 has a first RI approximately equal to the RI of a polymeric material in which the glass fiber 100 is used to form a window.

The formed glass fiber 100 may have a first glass material 110 having approximately the same optical performance as the second glass material 120. The formed glass fiber 100 may have a first glass material 110 having approximately the same viscosity versus temperature profile at hot working temperatures as the second glass material 120.

In one example, a glass fiber 100 is formed by selecting an optical glass N-SSK8 produced by SCHOTT North America, Inc., of Elmsford, NY, as a first glass material 110. This optical glass has a set of optical properties, including but not limited to an RI, an Abbe number, a transmission, a modulus and a CTE of 7.21 e⁻⁶/C. A second glass material 120, having a lower CTE, is then used to coat the first glass material 110 and form a glass fiber 100. The second glass material 120 is selected to be chemically compatible with the first glass material 110. Additionally, the second glass material 120 is selected to be thermally compatible with the first glass material 110 to facilitate forming the glass fiber 100. For example, the second glass material 120 must have approximately the same viscosity versus temperature profile at hot working temperatures as the first glass material 110.

During the hot forming of the glass fiber 100, the second glass material 120, because of the lower CTE, will impart a tensile force upon the first glass material 110 during and after cooling. This results in the second glass material 120 having compressive stresses after formation. Because the strength of the glass fiber 100 is directly related to the presence and growth of inconsistencies on the outer surface, the strength of the glass fiber 100 will be increased by mismatching the CTE's of the first glass material 110 and the second glass material 120, as discussed above. This is because the compressive stress formed in the second glass material 120 because of the shrinkage will cause the second glass material 120 to resist crack formation and crack propagation.

## Claims

1. A transparent composite window formed from glass fiber (100) and a polymer, wherein:
the glass fiber (100) includes a first glass material (110) and a second glass material (120) with the second glass material (120) forming a uniform coating around the first glass material (110);
the first glass material (110) having a first set of properties including a first refractive index, a first Abbe number, a first transmission, a first modulus of elasticity and a first coefficient of thermal expansion;
the second glass material (120) having a second set of properties including a second refractive index, a second Abbe number, a second transmission, a second modulus of elasticity and a second coefficient of thermal expansion, the second coefficient of thermal expansion being less than the first coefficient of expansion; and wherein:
the first refractive index is equal to the second refractive index and the first refractive index is equal to the refractive index of the polymer; and
the second glass material (120) is chemically and thermally compatible with the first glass material (110).

2. The transparent composite window of claim 1, wherein the glass fiber (100) has a generally rectangular or square cross-section.

3. The transparent composite window of claim 2, wherein the glass fiber (100) has a total thickness (T) of between about 1 microns to about 500 microns with an aspect ratio of width (W) to total thickness of between 5 and about 500.

4. The transparent composite window of claim 1, wherein the polymer is an epoxy resin.

5. The transparent composite window of claim 1, wherein the first glass material (110) and the second glass material (120) are both transparent glass.

6. The transparent composite window of claim 1, wherein the second modulus of elasticity is between equal to and 60% less than the first modulus of elasticity.

7. The transparent composite window of claim 1, wherein the second glass material (120) has the same optical performance as the first glass material (110).

## Patentansprüche

1. Transparentes Verbundmaterialfenster, gebildet aus Glasfasern (100) und einem Polymer, bei dem:
die Glasfaser (100) ein erstes Glasmaterial (110) und ein zweites Glasmaterial (120) enthält, wobei das zweite Glasmaterial (120) eine gleichmäßige Beschichtung um das erste Glasmaterial (110) bildet;
das erste Glasmaterial (110) einen ersten Satz von Eigenschaften aufweist, der einen ersten Brechungsindex, eine erste Abbe-Zahl, eine erste Transmission, einen ersten Elastizitätsmodul und einen ersten Wärmeausdehnungskoeffizienten umfasst;
das zweite Glasmaterial (120) einen zweiten Satz von Eigenschaften aufweist, der einen zweiten Brechungsindex, eine zweite Abbe-Zahl, eine zweite Transmission, einen zweiten Elastizitätsmodul und einen zweiten Wärmeausdehnungskoeffizienten umfasst, wobei der zweite Wärmeausdehnungskoeffizient kleiner als der erste Ausdehnungskoeffizient ist; und wobei:
der erste Brechungsindex gleich dem zweiten Brechungsindex ist und der erste Brechungsindex gleich dem Brechungsindex des Polymers ist; und
das zweite Glasmaterial (120) chemisch und thermisch mit dem ersten Glasmaterial (110) kompatibel ist.

2. Transparentes Verbundmaterialfenster nach Anspruch 1, bei dem die Glasfaser (100) einen allgemein rechteckigen oder quadratischen Querschnitt aufweist.

3. Transparentes Verbundmaterialfensternach Anspruch 2, bei dem die Glasfaser (100) eine Gesamtdicke (T) zwischen etwa 1 Mikrometer und etwa 500 Mikrometer mit einem Seitenverhältnis von Breite (W) zu Gesamtdicke zwischen 5 und etwa 500 aufweist.

4. Transparentes Verbundmaterialfensternach Anspruch 1, bei dem das Polymer ein Epoxidharz ist.

5. Transparentes Verbundmaterialfenster nach Anspruch 1, bei dem das erste Glasmaterial (110) und das zweite Glasmaterial (120) beide transparentes Glas sind.

6. Transparentes Verbundmaterialfenster nach Anspruch 1, bei dem der zweite Elastizitätsmodul zwischen gleich und 60% kleiner als der erste Elastizitätsmodul ist.

7. Transparentes Verbundmaterialfensternach Anspruch 1, bei dem das zweite Glasmaterial (120) die gleiche optische Leistung wie das erste Glasmaterial (110) aufweist.

## Revendications

1. Fenêtre composite transparente formée à partir de fibre de verre (100) et d'un polymère, dans laquelle :
la fibre de verre (100) comprend un premier matériau de verre (110) et un second matériau de verre (120), le second matériau de verre (120) formant un revêtement uniforme autour du premier matériau de verre (110) ;
le premier matériau de verre (110) ayant un premier ensemble de propriétés comprenant un premier indice de réfraction, un premier nombre d'Abbe, une première transmission, un premier module d'élasticité et un premier coefficient de dilatation thermique ;
le second matériau de verre (120) ayant un second ensemble de propriétés comprenant un second indice de réfraction, un second nombre d'Abbe, une seconde transmission, un second module d'élasticité et un second coefficient de dilatation thermique, le second coefficient de dilatation thermique étant inférieur au premier coefficient de dilatation ; et dans lequel :
le premier indice de réfraction est égal au second indice de réfraction et le premier indice de réfraction est égal à l'indice de réfraction du polymère ; et
le second matériau de verre (120) est chimiquement et thermiquement compatible avec le premier matériau de verre (110) .

2. Fenêtre composite transparente selon la revendication 1, dans laquelle la fibre de verre (100) présente une section transversale généralement rectangulaire ou carrée.

3. Fenêtre composite transparente selon la revendication 2, dans laquelle la fibre de verre (100) présente une épaisseur totale (T) comprise entre environ 1 micron et environ 500 microns avec un rapport d'aspect de la largeur (W) à l'épaisseur totale compris entre 5 et environ 500.

4. Fenêtre composite transparente selon la revendication 1, dans laquelle le polymère est une résine époxy.

5. Fenêtre composite transparente selon la revendication 1, dans laquelle le premier matériau de verre (110) et le second matériau de verre (120) sont tous les deux du verre transparent.

6. Fenêtre composite transparente selon la revendication 1, dans laquelle le second module d'élasticité est entre égal et 60 % inférieur au premier module d'élasticité.

7. Fenêtre composite transparente selon la revendication 1, dans laquelle le second matériau de verre (120) présente les mêmes performances optiques que le premier matériau de verre (110).
